# FASCICULE DE BREVET EUROPEEN

(11) **EP 0 564 347 B1**
(45) Date de publication et mention de la délivrance du brevet: **07.01.1998**
(21) Numéro de dépôt: 93400808.7
(22) Date de dépôt: 29.03.1993
(51) Int. Cl.: G02B 6/28, G02B 6/34, G02B 6/12

(54) **Multiplexeur en longueur d'onde notamment pour système optique intégré**
Wellenlängenmultiplexer, insbesondere für optisches integriertes System
Wavelength multiplexer, particularly for optical integrated system

(30) Priorité: 31.03.1992 FR 9203910
(43) Date de publication de la demande: 06.10.1993
(73) Titulaire: ALCATEL ALSTHOM COMPAGNIE GENERALE D'ELECTRICITE, 75008 Paris (FR)
(72) Inventeur: Artigue, Claude, F-92340 Bourg La Reine (FR)
(74) Mandataire: Bourely, Paul

(56) Documents cités:
- EP-A- 0 196 948
- EP-A- 0 393 372
- US-A- 4 923 271
- PATENT ABSTRACTS OF JAPAN vol. 9, no. 20 (P-330)(1743) 26 Janvier 1985; & JP-A-59 165 016

## Description

L'utilisation de circuits d'optoélectronique intégrée permet d'augmenter la capacité d'information des transmissions optiques en utilisant le multiplexage en longueurs d'ondes. Mais la plage de longueur d'onde utilisable pour cela est généralement limitée pour au moins deux raisons: la nécessité de répartir les longueurs d'ondes entre les divers types d'applications systèmes (détection directe ou cohérente, réseaux locaux ou transmissions longues distances, etc...), et l'intérêt qu'il peut y avoir à travailler à l'intérieur de la bande passante des amplificateurs optiques disponibles (amplificateurs à fibres optiques dopés aux terres rares, amplificateurs semiconducteurs, etc...).

Le problème généralement posé pour augmenter la capacité des systèmes de transmission utilisant le multiplexage en longueur d'onde est donc d'insérer un nombre maximal de canaux à l'intérieur d'une plage spectrale imposée. Cela impose de réduire l'intervalle entre canaux. Cette réduction doit être réalisée à la fois du côté de l'émetteur (multiplexage) et du côté du récepteur (démultiplexage).

Un multiplexeur connu de EP-A-0 393 372 comporte un groupement dispersif constituant un réseau de diffraction et disposé comme il est décrit dans le préambule de la revendication 3 ci-après.

De tels réseaux de diffraction sont connus sous le nom de miroirs de Fresnel. Il est aussi connu que, de préférence, les points d'injection, le réseau de diffraction et l'entrée du guide de sortie doivent se trouver sur un même cercle dit "cercle de Rowland".

Lorsqu'on veut augmenter le nombre des canaux spectraux rassemblés par un tel multiplexeur sans augmenter la largeur de bande globale, ce qui nécessite de diminuer l'intervalle entre canaux adjacents, ceci sans créer de diaphonie gênante entre ces canaux, il apparaît nécessaire d'augmenter le pouvoir de résolution spectrale du réseau de diffraction utilisé.

Diverses solutions ont été envisagées à ce problème. L'une consiste à augmenter la distance focale du réseau de diffraction. Elle oblige à augmenter dans la même proportion les dimensions de la plaquette constituant le multiplexeur, ce qui constitue un inconvénient majeur dans les applications aux télécommunications.

L'autre consiste à diminuer le pas du réseau. Elle rencontre une limite technologique qui est imposée par les procédés utilisables pour graver le réseau. Cette limite dépend du matériau constituant la plaquette. Elle est plus lointaine pour les systèmes de matériaux GaInAsP que pour le système SiO2/Si. Mais ce dernier présente des avantages de coût et de facilité d'intégration. Quel que soit le matériau utilisé, il est souhaité d'augmenter le pouvoir de résolution du multiplexeur, c'est-à-dire de diminuer l'intervalle spectral qui doit être maintenu entre canaux adjacents pour éviter une diaphonie gênante.

La présente invention a notamment pour but d'augmenter le nombre de canaux spectraux appartenant à une bande spectrale prédéterminée et susceptibles d'être rassemblés par un multiplexeur de dimensions limitées, sans faire apparaître de diaphonie gênante.

Et dans ce but, elle a notamment pour objet un multiplexeur en longueur d'onde pour système optique intégré, caractérisé par le fait qu'il comporte plusieurs groupements dispersifs pour focaliser plusieurs groupes d'ondes sur plusieurs entrées d'un même guide de sortie respectivement, ces groupes étant constitués par intercalage des longueurs d'onde des ondes à multiplexer.

Il doit être compris que le nombre des groupements dispersifs peut être égal à deux, trois ou plus. Par exemple, pour trois: un premier réseau focalise les ondes de rang 3k+1, un deuxième celles de rang 3k+2, et le troisième celles de rang 3k+3, k étant un entier croissant à partir de zéro. De manière plus générale, lorsque les ondes à multiplexer ont des rangs respectifs selon la succession de leurs longueurs d'ondes, et lorsque lesdits groupements dispersifs sont en un nombre H et ont des numéros respectifs, chaque dit groupement dispersif focalise les ondes dont le rang est égal à son numéro modulo H.

A l'aide des figures schématiques ci-jointes, on va décrire plus particulièrement ci-après, à titre d'exemple non limitatif, comment la présente invention peut être mise en oeuvre. Lorsqu'un même groupement dispersif est représenté sur plusieurs figures il y est désigné par un même signe de référence.

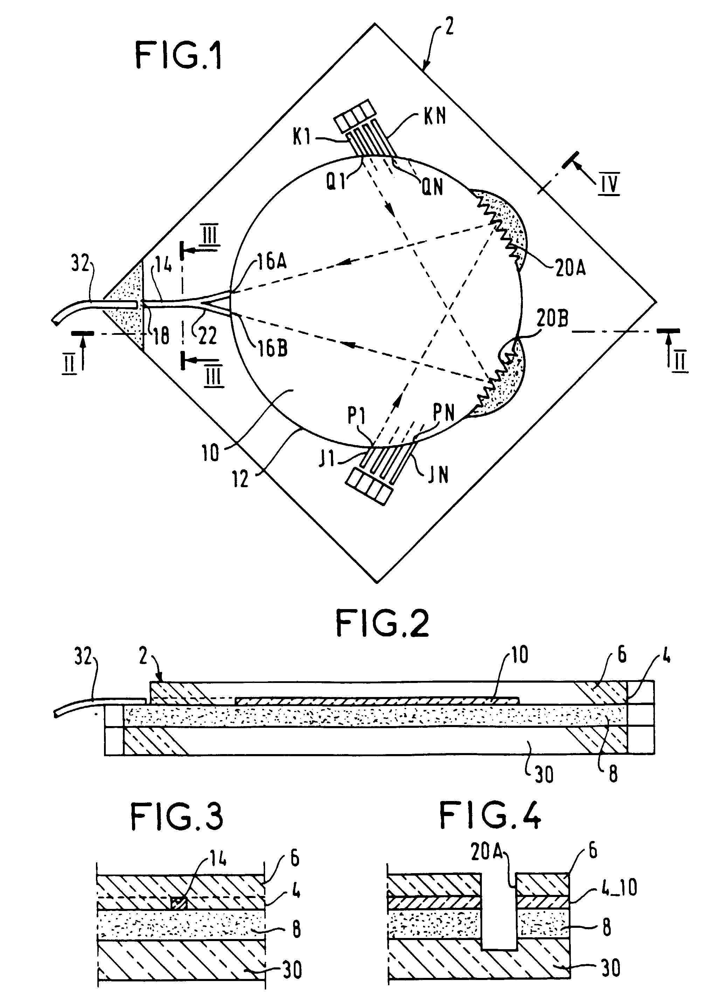

La figure 1 représente une vue de dessus d'un multiplexeur selon cette invention, comportant deux miroirs de Fresnel correspondant respectivement à deux voies de multiplexage.

La figure 2 représente une vue en coupe de ce multiplexeur selon la ligne II-II de la figure 1.

La figure 3 représente une vue en coupe de ce multiplexeur selon la ligne III-III de la figure 1.

La figure 4 représente une vue en coupe de ce multiplexeur selon la ligne IV-IV de la figure 1.

Le multiplexeur donné en exemple présente la forme d'une plaquette 2 comportant une couche de guidage 4 interposée entre deux couches de confinement 6, 8, cette couche de guidage comportant des parties guidantes dans lesquelles elle présente un indice de réfraction supérieur à celui des couches de confinement pour guider selon son plan des ondes optiques constituant des ondes internes à ce multiplexeur.

De manière générale, ce multiplexeur comporte les groupements dispersifs suivants :
- Une partie guidante constituant une aire guidante 10 s'étendant selon deux dimensions et limitée par un bord 12 pour permettre aux ondes internes de se propager dans diverses directions de ce plan à partir de ce bord et vers ce bord.
- Un guide de sortie 14 linéaire présentant: un combineur 22, une entrée 16A, et une entrée 16B occupant chacune un point du bord 12 pour recevoir des ondes internes provenant de cette aire guidante et pour les guider selon la direction de ce guide. Ce guide de sortie raccorde ces entrées à une sortie de multiplexeur 18 pour y amener une onde composite résultant de la superposition des ondes internes qu'il a reçues.
- Deux tronçons limités du bord 12 comportant une succession périodique de points diffractant la lumière pour constituer, pour les ondes internes se propageant vers ce tronçon, deux réseaux de diffraction 20A et 20B aptes à renvoyer ces ondes dans l'aire guidante 10 dans des directions dépendant de leurs longueurs d'onde. Ces réseaux sont concave pour permettre une focalisation de ces ondes.
- Enfin une pluralité d'injecteurs de lumière J1...JN pour la première voie de multiplexage, et une pluralité d'injecteurs de lumière K1,...,KN pour la seconde voie. Ces injecteurs sont portés par la plaquette 2 pour injecter chacun une onde interne dans l'aire guidante 10, respectivement vers les réseaux de diffraction 20A et 20B, à partir d'un point d'injection P1,...PN, respectivement Q1,...QN, appartenant au bord 12.

Ces réseaux réalisent respectivement une focalisation de ces ondes vers l'entrée 16A et l'entrée 16B du guide de sortie, et une injection de ces ondes dans ce guide. Pour chaque voie, les longueurs d'onde de ces ondes internes forment une pluralité échelonnée en correspondance respective avec la pluralité d'injecteurs de cette voie. Les points d'injection de chaque voie sont échelonnés en correspondance respective avec cette pluralité de longueurs d'onde pour assurer la focalisation de chacune de ces ondes internes sur l'entrée du guide de sortie correspondant à cette voie.

Les deux voies de multiplexage possèdent en commun l'aire guidante 10 et la sortie de multiplexeur 18. Chaque voie de multiplexage possède en propre ses injecteurs de lumière, son réseau de diffraction et une entrée du guide de sortie 14. Les points d'injection des deux voies de multiplexage sont choisis tels que les longueurs d'onde correspondant aux points d'injection de l'une de ces voies s'intercalent entre les longueurs d'onde correspondant aux points d'injection de l'autre voie.

Les longueurs d'onde des ondes à multiplexer forment une succession sensiblement régulière dans laquelle chaque longueur d'onde est séparée d'une longueur d'onde adjacente par un intervalle fixé par la densité spectrale d'un réseau de transmission dans lequel le multiplexeur est utilisé. Cette succession définit un rang 1...2N pour chaque longueur d'onde. Chaque point d'injection PX, QY a un rang 2X-1, 2Y identique au rang de la longueur d'onde correspondante. L'une et l'autre des deux voies de multiplexage constituent respectivement une voie impaire J1...JN, 20A, 16A dont les points d'injection P1...PN ont des rangs impairs, et une voie paire K1...KN, 20B, 16B dont les points d'injection Q1...QN ont des rangs pairs. Grâce à cela l'écart entre les longueurs d'ondes de deux ondes internes focalisées par un même réseau de diffraction est toujours sensiblement au moins égal au double dudit intervalle fixe.

Plus particulièrement, les couches guidantes, de confinement inférieur 8 et de confinement supérieur 6, sont constituées de silice, cette silice étant dopées au phosphore pour constituer les parties guidantes. Elles sont déposées sur un substrat de silicium 30. La couche de confinement inférieur 8 est représentée en moucheté pour permettre de la distinguer.

Pour simplifier la compréhension, le bord 12 de l'aire guidante a été représenté en coïncidence avec le cercle de Rowland. Mais il doit être compris qu'en pratique, ce bord peut s'étendre plus loin, par exemple jusqu'au bord de la plaquette 2, à distance des points d'injection, des réseaux de diffraction et des entrées du guide de sortie.

Les injecteurs de lumière sont des guides linéaires constitués dans la couche de guidage. Ils sont alimentés par des lasers GaInAsP/InP soudés au fond de logements gravés dans la plaquette.

Le guide de sortie 14 est également formé dans la couche de guidage. Mais il pourrait être constitué d'une jonction en Y à fibres optiques. Il se raccorde à une fibre optique 32 dite fibre amorce et collée sur un méplat 34 gravé dans la plaquette 20.

Les miroirs de Fresnel décrits ci-dessus pourraient être remplacés par d'autres groupements dispersifs tels que des combinaisons de lentilles dites géodésiques et de prismes dits géodésiques.

Par ailleurs il est bien connu qu'un multiplexeur peut être utilisé pour constituer un démultiplexeur.

## Revendications

1. Multiplexeur en longueur d'onde notamment pour système optique intégré comportant plusieurs injecteurs (J1...JN) injectant plusieurs ondes présentant plusieurs longueurs d'ondes, respectivement, ce multiplexeur comportant en outre un groupement dispersif diffractant et focalisant ces ondes pour les injecter dans un même guide de sortie grâce à une correspondance respective entre les positions de ces injecteurs et ces longueurs d'ondes, ce multiplexeur étant caractérisé par le fait que plusieurs dits groupements dispersifs (20A, 20B) focalisent plusieurs groupes de dites ondes sur plusieurs entrées (16A, 16B) du dit guide de sortie (14), respectivement, ces groupes présentant un intercalage mutuel des longueurs d'onde de leurs ondes.

2. Multiplexeur selon la revendication 1, dans lequel les ondes à multiplexer ont des rangs respectifs selon la succession de leurs longueurs d'ondes, et lesdits groupements dispersifs (20A, 20B) sont en un nombre H et ont des numéros respectifs, chaque dit groupement dispersif focalisant les ondes dont le rang est égal à son numéro modulo H.

3. Multiplexeur en longueur d'onde pour système optique intégré, ce multiplexeur présentant la forme d'une plaquette (2) comportant une couche de guidage (4) interposée entre deux couches de confinement (6, 8); cette couche de guidage comportant des parties guidantes présentant un indice de réfraction supérieur à celui de ces couches de confinement pour guider selon son plan des ondes optiques constituant des ondes internes à ce multiplexeur; ce multiplexeur comportant une voie de multiplexage comportant elle-même :
- une partie guidante constituant une aire guidante (10) s'étendant selon deux dimensions et limitée par un bord (12) pour permettre auxdites ondes internes de se propager dans diverses directions de ce plan à partir de ce bord et vers ce bord;
- un guide de sortie (14) linéaire présentant une entrée (16A) occupant un point dudit bord pour recevoir les ondes internes provenant de cette aire guidante et pour les guider selon la direction de ce guide, ce guide de sortie raccordant cette entrée à une sortie de multiplexeur (18) pour y amener une onde composite résultant de la superposition des ondes internes qu'il a reçues;
- un tronçon limité dudit bord présentant un groupement dispersif formé par une succession périodique de points diffractant la lumière pour constituer, pour desdites ondes internes se propageant vers ce tronçon, un réseau de diffraction (20A) apte à renvoyer ces ondes dans ladite aire guidante (10) dans des directions dépendant de leurs longueurs d'onde, ce réseau étant concave pour permettre une focalisation de ces ondes;
- et une pluralité d'injecteurs de lumière (J1...JN) portés par ladite plaquette pour injecter chacun une onde interne dans ladite aire guidante (10) vers ledit réseau de diffraction (20A), à partir d'un point d'injection (P1, PN) de cette onde appartenant audit bord (12), de manière que ce réseau réalise une focalisation de cette onde vers ladite entrée (16A) du guide de sortie, et une injection de cette onde dans ce guide, lesdites longueurs d'onde de ces ondes internes formant une pluralité échelonnée en correspondance respective avec cette pluralité d'injecteurs; et ces points d'injection formant une pluralité échelonnée en correspondance respective avec cette pluralité de longueurs d'onde pour assurer ladite focalisation de chacune de ces ondes internes sur ladite entrée du guide de sortie;
ce multiplexeur étant caractérisé par le fait que le guide de sortie (14) comporte deux entrées (16A, 16B) et un combineur optique (22) pour raccorder ces deux entrées à ladite sortie de multiplexeur (18); ce multiplexeur comportant une première et une deuxième dites voies de multiplexage ayant ladite aire guidante (10) et ladite sortie de multiplexeur (18) en commun, chaque dite voie de multiplexage ayant en propre une pluralité d'injecteurs (J1...JN) (K1...KN), une pluralité de longueurs d'onde, une pluralité de points d'injection (P1...PN) (Q1...QN), un réseau de diffraction (20A) (20B) et une entrée (16A) (16B) du guide de sortie (14), lesdites pluralités de points d'injection des deux voies de multiplexage étant choisies telles que les longueurs d'onde correspondant aux points d'injection (P1,...PN) de la première voie s'intercalent entre les longueurs d'onde correspondant aux points d'injection (Q1,...QN) de la seconde voie.

4. Multiplexeur selon la revendication 3, dans lequel lesdites longueurs d'ondes forment sensiblement une succession régulière dans laquelle chaque longueur d'onde est séparée d'une longueur d'onde adjacente par un intervalle fixe, cette succession définissant un rang pour chaque longueur d'onde; chaque point d'injection ayant un rang identique audit rang de la longueur d'onde correspondante; l'une et l'autre des deux voies de multiplexage constituant respectivement une voie impaire (J1...JN, 20A, 16A) dont les points d'injection (P1...PN) ont des rangs impairs, et une voie paire (K1...KN, 20B, 16B) dont les points d'injection (Q1, QN) ont des rangs pairs, de manière qu'un écart entre les longueurs d'ondes de deux ondes internes focalisées par un même réseau de diffraction soit toujours sensiblement au moins égal au double dudit intervalle fixe.

## Patentansprüche

1. Wellenlängenmultiplexer insbesondere für ein optisches integriertes System, der mehrere Injektoren (J1...JN) aufweist, die mehrere Wellen injizieren, welche jeweils mehrere Wellenlängen aufweisen, wobei dieser Multiplexer außerdem eine lichtstreuende Anordnung aufweist, die diese Wellen beugt und fokussiert, um sie dank einer jeweiligen Übereinstimmung zwischen den Positionen dieser Injektoren und diesen Wellenlängen in einen selben Ausgangsleiter zu injizieren, wobei dieser Multiplexer dadurch gekennzeichnet ist, daß jeweils mehrere lichtstreuende Anordnungen (20A, 20B) mehrere Wellengruppen auf mehrere Eingänge (16A, 16B) des Ausgangsleiters (14) fokussieren, wobei diese Gruppen eine gegenseitige Verschachtelung der Wellenlängen ihrer Wellen aufweisen.

2. Multiplexer nach Anspruch 1, bei dem die zu multiplexenden Wellen jeweilige Ränge besitzen, die der Abfolge ihrer Wellenlängen entsprechen, und die lichtstreuenden Anordnungen (20A, 20B) in einer Zahl H vorhanden sind und jeweilige Nummern aufweisen, wobei jede lichtstreuende Anordnung die Wellen, deren Rang ihrer Nummer Modulo H entspricht, fokussiert.

3. Wellenlängenmultiplexer für ein optisches integriertes System, wobei dieser Multiplexer die Form einer Platte (2) besitzt, die eine Leitungsschicht (4) aufweist, welche zwischen zwei Begrenzungsschichten (6, 8) angeordnet ist; wobei diese Leitungsschicht leitende Bereiche umfaßt, die einen Brechungsindex aufweisen, der größer ist als jener der Begrenzungsschichten, um entlang ihrer Ebene Lichtwellen zu leiten, welche multiplexerinterne Wellen darstellen; wobei dieser Multiplexer einen Multiplexkanal aufweist, der seinerseits aufweist:
- einen leitenden Bereich, der eine leitende Fläche (10) bildet, die sich in zwei Dimensionen erstreckt und von einem Rand (12) begrenzt wird, um den internen Wellen zu gestatten, sich in verschiedenen Richtungen dieser Ebene von diesem Rand weg und zu diesem Rand hin fortzupflanzen.
- einen linearen Ausgangsleiter (14), welcher einen Eingang 16A aufweist, der einen Punkt des Randes besetzt, um die aus dieser leitenden Fläche kommenden internen Wellen zu empfangen und um sie entlang der Richtung dieses Leiters weiterzuleiten, wobei dieser Ausgangsleiter diesen Eingang mit einem Multiplexerausgang (18) verbindet, um eine zusammengesetzte Welle dorthin zu führen, die sich aus der Überlagerung der internen Wellen ergibt, die er empfangen hat;
- einen begrenzten Abschnitt des Randes, der eine lichtstreuende Anordnung aufweist, die von einer periodischen Folge lichtbeugender Punkte gebildet wird, um für die internen Wellen, die sich zu diesem Abschnitt hin fortpflanzen, ein Beugungsgitter (20A) zu bilden, das imstande ist, diese Wellen in Richtungen, die von ihrer Wellenlänge abhängen, in die leitende Fläche (10) zurückzusenden, wobei dieses Gitter konkav ist, um eine Fokussierung dieser Wellen zu ermöglichen;
- und eine Mehrzahl von Lichtinjektoren (J1...JN), die von der Platte getragen werden und jeweils dazu dienen, eine interne Welle von einem Injektionspunkt (P1, PN) dieser Welle, der zum Rand (12) gehört, in die leitende Fläche (10) in Richtung auf das Beugungsgitter (20A) zu injizieren, so daß dieses Gitter eine Fokussierung dieser Welle auf den Eingang (16A) des Ausgangsleiters und eine Injektion dieser Welle in diesen Leiter durchführt, wobei die Wellenlängen dieser internen Wellen eine Mehrzahl bilden, die in jeweiliger Übereinstimmung mit dieser Mehrzahl von Injektoren gestaffelt ist; und wobei diese Injektionspunkte eine Mehrzahl bilden, die in jeweiliger Übereinstimmung mit dieser Mehrzahl von Wellenlängen gestaffelt ist, um die Fokussierung jeder dieser internen Wellen auf den Eingang des Ausgangsleiters sicherzustellen;
wobei dieser Multiplexer dadurch gekennzeichnet ist, daß der Ausgangsleiter (14) zwei Eingänge (16A, 16B) und eine optische Weiche (22) zum Anschluß dieser beiden Eingänge an den Multiplexerausgang (18) aufweist; wobei dieser Multiplexer einen ersten und einen zweiten Multiplexkanal umfaßt, welche die leitende Fläche (10) und den Multiplexerausgang (18) gemeinsam haben, wobei jeder Multiplexkanal eine Mehrzahl von Injektoren (J1...JN) (K1...KN), eine Mehrzahl von Wellenlängen, eine Mehrzahl von Injektionspunkten (P1...PN) (Q1...QN), ein Beugungsgitter (20A) (20B) und einen Eingang (16A) (16B) des Ausgangsleiters (14) besitzt, wobei die Injektionspunkte der beiden Multiplexkanäle so gewählt sind, daß sich die Wellenlängen, die den Injektionspunkten (P1,...PN) des ersten Kanals entsprechen, zwischen die Wellenlängen einfügen, die den Injektionspunkten (Q1,...QN) des zweiten Kanals entsprechen.

4. Multiplexer nach Anspruch 3, bei dem die Wellenlängen im wesentlichen eine regelmäßige Folge bilden, in der jede Wellenlänge von einer benachbarten Wellenlänge durch ein festgelegtes Intervall getrennt ist, wobei diese Folge einen Rang für jede Wellenlänge definiert; wobei jeder Injektionspunkt einen Rang besitzt, der mit dem Rang der entsprechenden Wellenlänge übereinstimmt; wobei der eine und der andere der zwei Multiplexkanäle jeweils einen ungeraden Kanal (J1...JN, 20A, 16A), dessen Injektionspunkte (P1...PN) ungerade Ränge besitzen, und einen geraden Kanal (K1...KN, 20B, 16B) bilden, dessen Injektionspunkte (Q1, QN) gerade Ränge besitzen, so daß der Abstand zwischen den Wellenlängen zweier interner Wellen, die von einem selben Beugungsgitter fokussiert werden, immer im wesentlichen wenigstens dem Doppelten des festgelegten Intervalls entspricht.

## Claims

1. Wavelength division multiplexer suitable for integrated optical systems and comprising a plurality of injectors (J1 through JN) injecting a plurality of waves having a plurality of respective wavelengths, the multiplexer further including a dispersive group diffracting and focusing these waves to inject them into a common output guide by virtue of a respective correspondance between the injector positions and the wavelengths, the multiplexer being characterised in that a plurality of said dispersive groups (20A, 20B) focus a plurality of groups of said wavelengths onto a plurality of respective entries (16A, 16B) of said output guide (14), said groups having the wavelengths of their waves mutually interleaved.

2. Multiplexer according to claim 1 wherein the waves to be multiplexed are ranked in wavelength order, there are H respectively numbered dispersive groups (20A, 20B) and each dispersive group focuses the wave whose rank is equal to its number modulo H.

3. Wavelength division multiplexer for integrated optical systems in the form of a wafer (2) comprising a guide layer (4) disposed between two confinement layers (6, 8), said guide layer comprising guide parts having a refractive index higher than that of said confinement layers whereby it is adapted to guide in its own plane optical waves constituting waves internal to said multiplexer, which comprises a multiplexing channel having:
- a guide part constituting a two-dimensional guide area (10) delimited by an edge (12) to enable said internal waves to propagate in various directions in said plane away from and towards said edge;
- a linear output guide (14) having an entry (16A) at a point on said edge to receive internal waves from said guide area and to guide them in the direction of said guide, said output guide connecting said entry to an output of the multiplexer (18) to convey thereto a composite wave produced by superposing the internal waves that it has received;
- a limited section of said edge having a dispersive group formed by a periodic succession of points diffracting light to constitute, for internal waves propagating towards said section, a diffraction grating (20A) adapted to divert said waves into said guide area (10) in directions dependent on their wavelength, said grating being concave to focus said waves; and
- a plurality of light injectors (J1 through JN) carried by said wafer for injecting respective internal waves into said guide area (10) towards said diffraction grating (20A) from an injection point (P1, PN) on said edge (12) so that said grating focuses said wave towards said entry (16A) of the output guide and injects said wave into said guide, said wavelengths of said internal waves being staggered in corresponding relationship to said plurality of injectors, and said injection points being staggered in corresponding relationship to said wavelengths to achieve said focusing of each internal wave at said output guide entry;
said multiplexer being characterised in that the output guide (14) has two entries (16A, 16B) and an optical combiner (22) for connecting said two entries to said multiplexer output (18); said multiplexer comprising first and second multiplexing channels sharing said guide area (10) and said multiplexer output (18), each multiplexing channel having its own plurality of injectors (J1 through JN) (K1 through KN), its own plurality of wavelengths, its own plurality of injection points (P1 through PN) (Q1 through QN), its own diffraction grating (20A) (20B) and its own entry (16A) (16B) of the output guide (14), said pluralities of injection points of said two multiplexing channels being chosen so that the wavelengths associated with the injection points (Pl through PN) of the first channel are interleaved with the wavelengths associated with the injection points (Q1 through QN) of the second channel.

4. Multiplexer according to claim 3 wherein said wavelengths form a substantially regular succession in which each wavelength is separated from an adjacent wavelength by a fixed interval, said succession defines a rank for each wavelength, each injection point having a rank identical to said rank of the associated wavelength; said multiplexing channels respectively constituting an odd channel (J1 through JN, 20A, 16B) with odd ranked injection points (P1 through PN) and an even channel (K1 through KN, 20B, 16B) with even ranked injection points (Q1, QN), whereby the interval between the wavelengths of two internal waves focused by the same diffraction grating is always at least equal to substantially twice said fixed interval.
